(19)

Europäisches
Patentamt
European
Patent Office
Office européen
des brevets

(11) **EP 4 250 573 A1**

(12) **EUROPEAN PATENT APPLICATION**

(43) Date of publication:
**27.09.2023 Bulletin 2023/39**

(21) Application number: **22164324.0**

(22) Date of filing: **25.03.2022**

(51) International Patent Classification (IPC):
**H04B 1/10** *(2006.01)* **H04B 15/02** *(2006.01)*

(52) Cooperative Patent Classification (CPC):
**H04B 15/02; H04B 1/1027;** H04B 2001/1063;
H04B 2001/1072

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **INTEL Corporation
Santa Clara, CA 95054 (US)**

(72) Inventors:
• **SETHURAMAN, Muralidharan
560093 Bangalore (IN)**

• **HEGDE, Mythili
560078 Bangalore (IN)**
• **DAS, Sajal Kumar
560115 Bangalore (IN)**
• **R, Aneesh
629175 Thuckalay (IN)**
• **SANGLE, Parshuram
416234 Kolhapur (IN)**
• **PEDDIREDDY, Prathibha
560087 Bengaluru (IN)**

(74) Representative: **2SPL Patentanwälte PartG mbB
Landaubogen 3
81373 München (DE)**

(54) **METHOD AND DEVICE TO MITIGATE A RADIO FREQUENCY INTERFERENCE TO A WIRELESS MODEM CAUSED BY PLATFORM COMPONENTS**

(57)     Methods and apparatus for mitigating a platform-emitted interference to a modem in a device. A processor may detect, based on an application or a use case running on the device, a need to implement an interference mitigation measure by the modem to mitigate an interference caused by an interference signal emitted due to operation of other platform components in the device. The processor sends a message to the modem based on an interference profile stored in the device to implement the interference mitigation measure by the wireless modem. The interference profile includes frequency, bandwidth type, and bandwidth of an interference signal, or a filter number to be used for interference mitigation. The modem may perform an interference impact analysis based on the message and perform an interference mitigation measure to mitigate an interference to the received signal based on the interference impact analysis.

Detect, by a processor in a device based on an application or a use case running on the device, a need to implement an interference mitigation measure by a wireless modem in the device to mitigate an interference caused by an interference signal emitted due to operation of at least one other component in the device.
(1102)

Send, by the processor, a message to the wireless modem based on an interference profile stored in the device to implement the interference mitigation measure by the wireless modem.
(1104)

FIG. 11

**Description**

**Background**

Nowadays, a device platform (a user device such as a laptop, a personal computer, a tablet, a mobile phone, a smart phone, etc.) contains various components such as, a memory, a voltage regulator, a cellular modem, a Wi-Fi modem, a Bluetooth modem, Universal Serial Bus (USB) components, etc. Due to the advancement of technologies and needs for higher performance, the operating frequencies of these platform components keep increasing. As the operating frequencies of the platform components on the device become closer to the reception frequencies of a wireless modem (e.g., a cellular modem, a Wi-Fi modem, a Bluetooth modem, etc.) housed inside the device platform, the wireless radiation from operations of these platform components may interfere with the wireless modem reception signals. This can lead to a significant degradation of wireless modem's data throughput performance. For example, the fully integrated voltage regulator (FIVR) or double data rate (DDR) memory switching frequencies in a device platform may interfere with the cellular or WiFi downlink receptions and degrade the cellular or WiFi modem reception quality and reduce the data throughput.

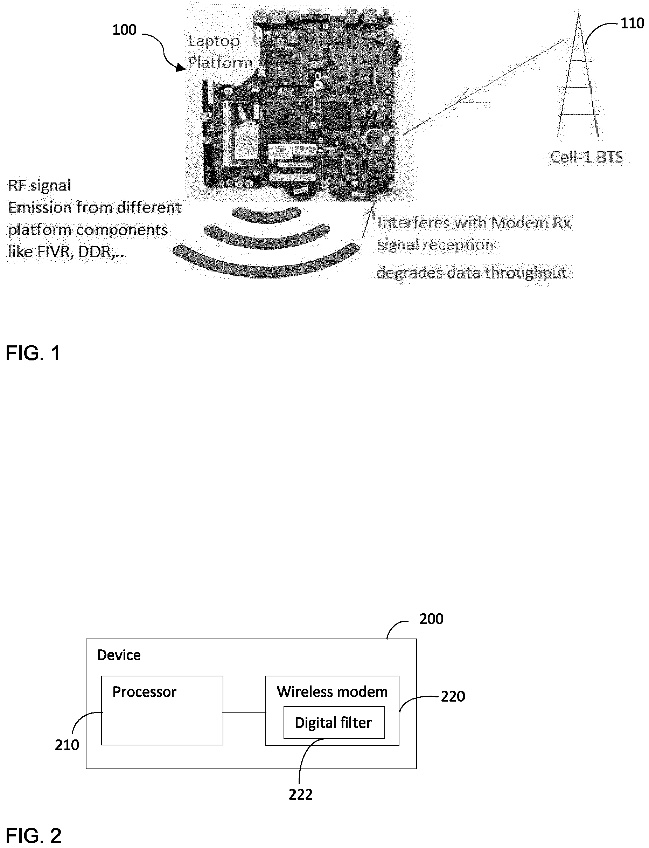

FIG. 1 shows an example device platform 100 (a laptop platform as an example) where radio frequency (RF) signals emitted from the platform components (such as FIVR, DDR, etc.) interfere with wireless modem's reception (Rx) signal and degrades its data throughput performance. The device platform 100 includes numerous components and wireless modems. The RF signals emitted during normal operations of the platform components (e.g., FIVR, DDR, etc.) may interfere with the wireless modem Rx signals (e.g., the downlink (DL) signals from a cellular base station 110. Without any solution for the above issue, the device platform requires RF shielding in a printed circuit board (PCB) to confine the interference signals emitted from the device platform components. This could increase the cost (PCB design) and thickness of the device platform, which is not preferable.

Conventionally, a processor (a system-on-chip (SoC)) in the device platform gets the knowledge of presently used DL frequencies (i.e., Rx frequencies) from the cellular or Wi-Fi modem. The processor then tries to shift the operating frequency of the component (e.g., FIVR, DDR, etc.) to some other frequencies (e.g., a lower frequency than the DL frequency) so that the electromagnetic radiation from the platform components does not interfere with the wireless modem Rx frequency signal. For example, the FIVR switching frequency or DDR access frequency may be dynamically changed based on a priori knowledge of the Rx frequency channel (e.g., Long-Term Evolution (LTE) or Wi-Fi channel) being used.

This conventional solution has many disadvantages. One of the disadvantages is a system performance degradation. As the operating frequency of the platform component is reduced, the overall performance of the system will slow down. For example, if the DDR access frequency is lowered, then the application will run slower, which causes a poor user experience, and the system will not run with optimum performance.

In addition, it is difficult to track a component frequency change due to the change of the DL frequency during operation. A device platform has various components which emit electromagnetic radiation at different frequencies. In such cases it is difficult to shift the frequencies of all platform components. In addition, in a modem (especially in a cellular mobile modem) there is a possibility of changing the DL frequencies time to time. Therefore, when a DL frequency is changed from high to low frequency band or vice versa then changing the frequency for different platform components becomes a difficult task.

Many platform components will come under this RF emission in the future. As the operating frequencies of various platform components are increasing, there will be many such components which will emit the interfering RF signals. Therefore, shifting the operating frequencies for each of these platform components to different frequencies and monitoring and controlling them will be very difficult and may not be manageable.

The conventional scheme puts a burden on the processor. The processor has to monitor all these interference aspects for various modems like, cellular modem, Wi-Fi modems etc., which may not be a right design. The conventional method is not a long-term solution to solve the above issues as situation changes with the change of modules (e.g., FIVR, DDR, etc.). Shifting the operating frequency of the platform components would not be a proper solution, as it may still emit interference signals in the system (if the frequencies are relatively at higher range) and those in turn will have effect on signal reception.

**Brief description of the Figures**

Some examples of apparatuses and/or methods will be described in the following by way of example only, and with reference to the accompanying figures, in which

FIG. 1 shows an example device platform;
FIG. 2 is a schematic block diagram of a device in accordance with one example;

FIG. 3 shows an example process for platform-emitted RF interference cancellation or mitigation;

FIG. 4 shows example frequency characteristics of several interference signals;

FIG. 5 shows the case where the interference signal frequency is far away from the downlink (DL) Rx signal frequency band of the modem;

FIG. 6 shows the case where the interference signal frequency is close to, but not inside, the DL Rx frequency band of the modem;

FIG. 7 shows the case where the interference signal frequency is inside the Rx signal frequency band of the modem;

FIGS. 8A-8C show an example process of interference signal removal treating the interference signal as a spur signal;

FIG. 9 shows an example scheme for interference frequency avoidance in cell selection and re-selection process in an idle mode;

FIG. 10 shows an example scheme for interference frequency avoidance in a handover process;

FIG. 11 is a flow diagram of an example process for mitigating a platform-emitted RF interference to a wireless modem in a device;

FIG. 12 is a flow diagram of an example process implemented by a wireless modem for mitigating a platform-emitted RF interference to the wireless modem;

FIG. 13 illustrates a user device in which the examples disclosed herein may be implemented; and

FIG. 14 illustrates a base station or infrastructure equipment radio head in which the examples disclosed herein may be implemented.

## Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are disclosed for methods and devices for mitigating the platform-emitted RF interference to a wireless modem on the same device platform.

FIG. 2 is a schematic block diagram of a device (or a device platform) in accordance with one example. The device (or a device platform) 200 includes a processor 210 (e.g., a system-on-chip (SoC)) and a wireless modem 220. A device platform is a system that includes hardware devices/circuitries and an operating system on which an application, a program, or a process runs. Hereafter, the terms "device," "platform," and "device platform" will be used interchangeably. The processor 210 and the wireless modem 220 include circuitries configured to perform functionalities in accordance with the examples disclosed herein, respectively. The wireless modem 220 is configured to process and transmit/receive signals in accordance with any wireless communication standards. The modem 220 may be a cellular modem (e.g., a Third Generation (3G), Fourth Generation (4G), Fifth Generation (5G), Sixth Generation (6G) modem, or the like), a Wi-Fi modem, a Bluetooth modem, or the like. The device 200 (such as a laptop, a tablet, a mobile phone, etc.) houses additional components such as, FIVR, DDR, USB devices/components, etc. (not shown in FIG. 2). These platform components may emit an RF signal (referred to as "platform-emitted RF signal" or "interference signal") during their operations. The platform-emitted RF signals may cause interference (referred to as "platform-emitted RF interference") with the received signal in the wireless modem 220 in the device 200 and significantly reduces data throughput.

In examples, the platform-emitted RF signals are characterized in advance and an interference profile is generated based on the frequency characteristics of each platform-emitted RF signal. During the normal operation of the platform components, the processor 210 may determine whether to shift the operating frequency of the platform components (such as, FIVR, DDR, USB, etc.) from the reception (Rx) frequency of the wireless modem 220 or initiate the interference mitigation measure/scheme by the wireless modem 220 based on the running application or use-case requirements. If the processor 210 determines to implement the interference mitigation measure/scheme by the wireless modem 220, the processor 210 may transfer to the modem 220 all the known parameters of the RF signals emitted from the platform components (e.g., FIVR, DDR, USB, etc.). Based on the impact of the interference frequency on the currently used Rx frequency at the wireless modem 220, the wireless modem 220 may decide a specific action to be taken. For example, if the interference frequency is very far from the Rx frequency of the wireless modem 220, no action may be taken. If the interference frequency is nearby but out of band of the Rx frequency of the wireless modem 220, digital filtering with pre-stored filter coefficients may be applied. If the interference frequency is in-band with the RX signal frequency of the wireless modem 220, spur removal or spatial-temporal whitening filtering may be performed on the Rx signal. Apart from these mitigation techniques, interference avoidance techniques may be performed. For example, the frequency affected/interfered by the platform-emitted RF signals may not be selected or deprioritized during cell selection/re-selection and handover measurement reporting. This can be a long-term solution (robust solution) for platform-emitted RF interference mitigation.

In examples, the processor 210 may be configured to detect, based on an application or a use case running on the device 200, a need to implement an interference mitigation measure by the wireless modem 220 to mitigate the platform-emitted RF interference caused by the platform-emitted RF signal due to the operation of at least one other component in the device 200. A use case describes how a user uses a system to accomplish a particular goal. The processor 210 may be configured to send a message (command) to the wireless modem 220 based on an interference profile stored in the device 200 to implement the interference mitigation measure by the wireless modem 220. The interference profile may include information regarding at least one of a frequency of an interference signal, a bandwidth type of an interference signal, a bandwidth of an interference signal, or a filter number to be used for interference mitigation, etc.

In some examples, the frequency characteristics of the interference signal emitted from the at least one other component in the device 200 may be determined in advance and the interference profile may be generated based on the frequency characteristics.

In some examples, the processor 210 may be further configured to determine based on the application or use case running on the device 200 whether reducing an operating frequency of the at least one other component in the device 200 will have a negative impact on performance or user experience, and send the message to the modem 220 if it is determined that reducing the operating frequency of the at least one other component will have a negative impact on the performance or user experience. The processor 210 may be configured to reduce the operating frequency of the component if it is determined that reducing the operating frequency of the at least one other component does not have a negative impact on the performance or user experience.

The wireless modem 220 is configured to implement a measure to mitigate the platform-emitted RF interference. The wireless modem 220 is configured to receive a message from the processor 210 in the device 200. The message may include information related to the interference signal emitted due to operation of the at least one other component in the device 200. The wireless modem 220 may be configured to perform an interference impact analysis based on the information provided in the message to determine an impact of the interference signal to a received signal received by the wireless modem 220 and perform an interference mitigation measure to mitigate an interference to the received signal based on the interference impact analysis.

The wireless modem 220 may include a digital filter 222 (e.g., any conventional linear or non-linear digital filters) to process the received signal with digital filter coefficients. The digital filter coefficients may be pre-computed based on the frequency characteristics of each interference signal and stored in the wireless modem 220 and may be selected based on the information in the message received from the processor 210.

In some examples, the modem 220 may be configured to perform a spur frequency removal on the received signal if the interference signal is a narrow band signal and perform spatial-temporal whitening on the received signal if the interference signal is a wideband signal, which will be explained in detail below.

In some examples, the wireless modem 220 may be further configured to perform the interference mitigation measure to avoid an interference frequency in cell selection and reselection or handover between cells. In an idle mode, the wireless modem 220 performs measurements on neighbor cells for cell selection and reselection and camps on one of the cells based on the measurements. In a connected mode, the wireless modem 220 performs measurements on neighbor cells for handover between cells and reports the measurement results to the network. When selecting a cell for camping in an idle mode, or in reporting the measurement results for one or more frequencies of neighbor cells to a network in a connected state, the wireless modem 220 may reduce a measurement result for a frequency that is same as or close to the interference frequency by a certain amount or percentage.

The example schemes disclosed herein are different from conventional interference cancellation. Various platforms have various interference frequencies emitted by various platform components. In examples disclosed herein, during the platform calibration or configuration, the frequency characteristics of the platform-emitted RF signals are captured and an interference profile for each interference signal is generated and stored in a memory. When the platform components are operational, the processor 210 may inform the modem 220 of the information such as interference frequency, bandwidth type, bandwidth, power level, and/or filter coefficients to be used, or the like. Based on the information provided by the processor 210, the modem 220 may determine the impact on its DL Rx operation based on whether that interference frequency resides far from, close to, or inside the presently operational DL signal bandwidth. If the interference frequency lies far from the Rx frequency, no action may be taken, if close by, filtering may be performed treating the interference signals as an out-of-band interferer, and if the interference signal lies inside the Rx bandwidth, then a spur removal or whitening filtering may be performed.

Conventionally, the modem is not aware of the platform-emitted interference signals (e.g., some undesired signals are coming from the same platform). The modem treats the platform-emitted interference signal as unknown interferer (i.e., processes whatever composite signal received), and no special technique is employed to remove the platform-emitted interference signals.

In examples disclosed herein, the platform-emitted interference signals are treated as known signal (it is known in frequency domain, though in time domain it is unknown to reconstruct the signal) and canceled from the received signal accordingly. This is different from a self-interference cancellation technique. In self-interference cancellation, the interference data is known, and the cancelation signal is generated from the known data and a channel matrix (h). However, in the examples disclosed herein, the interference data is not known but the signal frequency characteristics (such as the frequency and bandwidth, etc.) are known. In examples, the interference mitigation is performed in frequency domain to cancel or suppress the interference signal based on the known frequency characteristics of the interference signals.

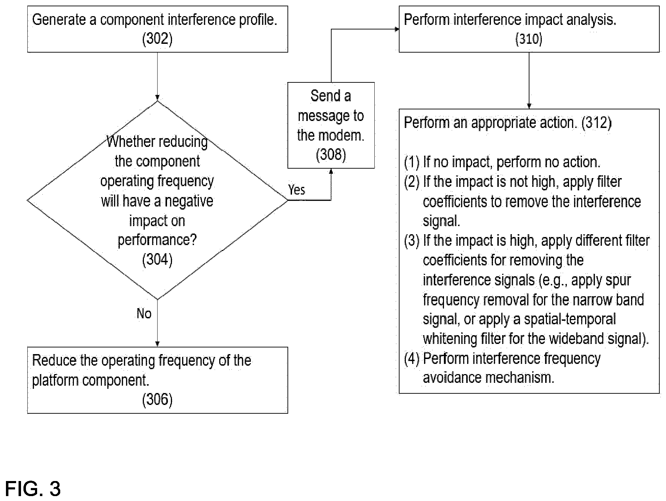

FIG. 3 shows an example process for platform-emitted RF interference cancellation or mitigation. In examples, an interference profile for one or more platform components (such as DDR, FIVR, USB, or any other components) in a device 200 is generated (302). During the device platform configuration, the RF signals (i.e., interference signals) emitted due to the operations of each of the platform components (e.g., FIVR, DDR memory, USB components, etc.) are characterized using a spectrum analyzer and the frequency characteristics of the platform-emitted RF signals (e.g., the center frequency and bandwidth of the RF signals, etc.) are captured. An interference profile for one or more platform components is then generated based on the obtained signal frequency characteristics and stored in a memory in the device platform 200.

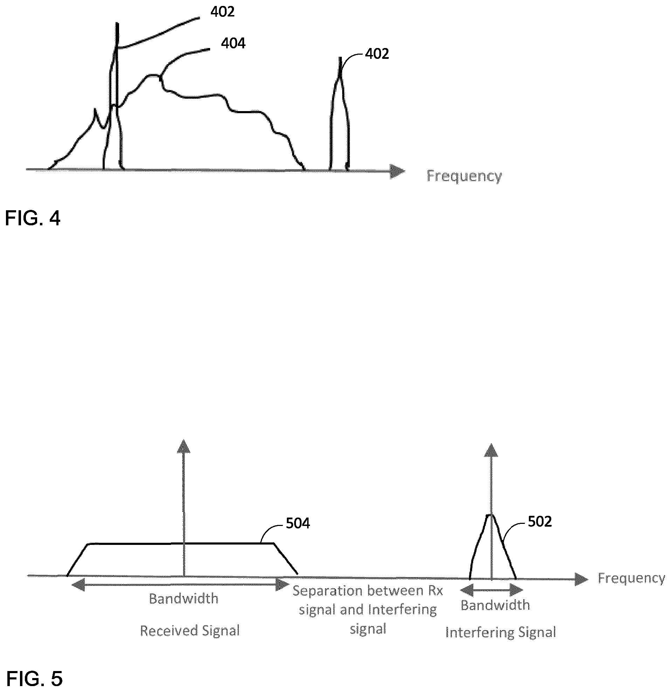

FIG. 4 shows example frequency characteristics of several interference signals. As shown in FIG. 4, each interference signal may have different frequency characteristics. Some signals 402 may be narrowband and other signals 404 may be wideband, and the occupying frequency range may be different from each other. The frequency characteristics of an interference signal(s) from each of a plurality of platform components are captured, and an interference profile is generated for each interference signal.

Table 1 shows an example interference profile. The interference profile may include a component name, an interference frequency, a type of the interference signal (e.g., narrow band or wide band), a bandwidth of the interference signal, and/or a filter number to be used for interference mitigation or cancellation, or the like.

Table 1

| Component name | Interference frequency (f_int) | Narrow nand or wide band interferer | Bandwidth (BW) | Filter number to be used for cancellation/mitigation |
|---|---|---|---|---|
| DDR | 2 GHz | NB or WB | 3 MHz | #2 |
| FIVR | | | | |
| ... | | | | |

Digital filter coefficients for cancelling the interference signals are computed based on the obtained signal frequency characteristics of each interference signal. The pre-computed digital filter coefficients may be stored in a memory of the wireless modem 220. Each filter (i.e., filter coefficients) may be identified by a filter number. When a platform component(s) is operating, the processor 210 may provide a corresponding filter number to the wireless modem 220, and the wireless modem 220 may apply the corresponding filter coefficients for the interference signal rejection.

The wireless modem 220 may process the Rx signal with a digital filter using the filter coefficients corresponding to the filter number provided by the processor 210. The design of the filter coefficients for out-of-band and in-band interference signal rejection are explained in detail below.

In the device 200, different applications or use cases may be running at different times. A use case describes how a user uses a system to accomplish a particular goal. The modem 220 may inform the processor 210 of the Rx frequency (e.g., downlink frequency) used by the modem 220 using the processor-modem interface (e.g., a Mobile Broadband Interface Model (MBIM) command or an AT command). With the information of the modem Rx frequency, the processor 210 may reduce the operation frequency of the platform component(s) (e.g., the DDR access frequency or the FIVR switching frequencies, etc.) to reduce/avoid the interference caused by the RF interference signals emitted due to the operations of the platform components to the wireless modem Rx signal. By shifting the operation frequency of the platform component(s) the RF signal emitted from the platform component(s) may not interfere with the modem Rx frequency. This may cause slowness in the system e.g., performance degradation. Some applications or use cases can tolerate the slowness of the system. For example, when the workload of the applications/use cases is low, the system may tolerate the slowness of the system. However, for other applications or use cases this slowing down of the operating frequency of the platform component(s) may cause performance degradation and hence degradation of the user experience.

Referring to FIG. 3, in examples, the processor 210 may (optionally) decide for the need of modem interference mitigation. Based on the applications or use cases running on the device, the processor 210 may (optionally) decide whether reducing the component operating frequency will have a negative impact on the performance or user experience (304). If it is determined that reducing the component operating frequency will not have a negative impact on the performance or user experience, the processor 210 may reduce the operating frequency of the platform component(s), such as DDR, FIVR, etc. (306). In this case, the processor 210 may manage the platform-emitted RF interference by shifting the operating frequency of the platform component(s), such as the DDR/FIVR frequency.

On the other hand, if the processor 210 determines that reducing the component operating frequency will have a negative impact on the performance or user experience, and interference mitigation by the modem 220 is needed, the processor 210 may send a message (command) to the modem 220, e.g., through a host-modem interface (AT-Command, or MBIM interface) (308). This message (command) may contain the interference frequency, the interference type (whether it is a narrow band or wide band interferer), the bandwidth (BW) of the interference signal, the filter number to be applied for interference signal rejection, or the like. In this case, the operating frequency of the platform component (e.g., DDR, FIVR, or other component) is not changed and the system will not slow down.

After receiving the message for platform interference mitigation/cancellation from the processor 210, the modem 220 may analyze the impact of the interference frequencies on the currently used modem DL frequency (Rx) for signal reception (310). Based on the analysis, the modem 220 may then perform an appropriate action (312). If there is no impact, the modem 220 may not perform any action. If the impact is not high, the modem 220 may apply stored filter coefficients for removing the interference signals. If the impact is high, the modem 220 may apply different stored filter coefficients for removing the interference signals. For example, the modem 220 may apply spur frequency removal for the narrow band signal or apply a spatial-temporal whitening filter for the wideband signal.

Alternatively, the modem 220 may perform an interference frequency avoidance mechanism. The modem 220 may deprioritize the interference-affected frequency in camping on a cell in an idle mode or reporting measurement results to the network in a connected state, which will be explained in detail below.

FIG. 5 shows the case where the interference signal frequency 502 is far away from the DL Rx signal frequency band 504 of the modem 220 (i.e., the no impact case). If the DL Rx signal frequency (f_DL) is very far from the interference signal frequency (f_int), for example, if (f_DL - f_int) > 200 MHz, then it may not cause any signal degradation for the modem Rx signal reception. Therefore, in this case the modem 220 may not do any action to cancel the interference frequency.

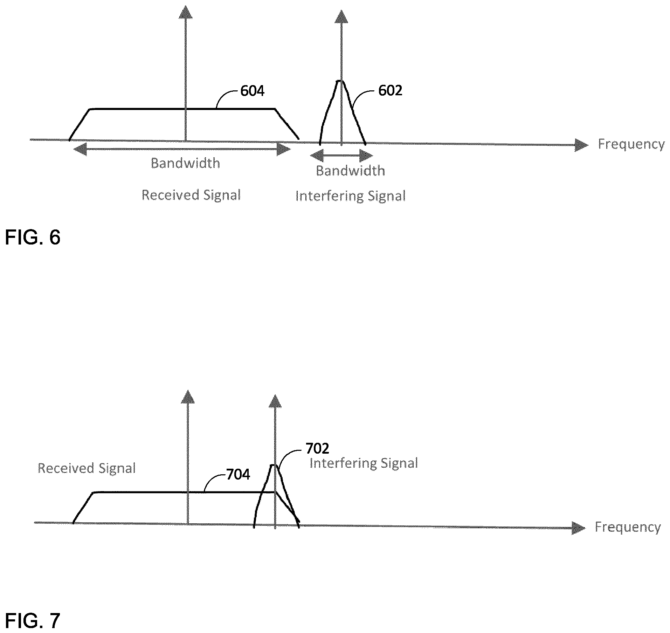

FIG. 6 shows the case where the interference signal frequency 602 is close to, but not inside, the DL Rx frequency band 604 of the modem 220 (i.e., the case where the impact is not high). If the DL Rx signal frequency (f_DL) is close to the interference signal frequency (f int) but not inside the DL Rx signal BW, for example if {(f_DL - f int) < 200 MHz and (f_DL - f_int) > 20 MHz}, the modem 220 may apply a digital filter to the received Rx signal to remove the interference signal. The processor 210 may provide the filter number to be applied in the message to the modem 220, and the modem 220 may apply the corresponding filter coefficients to the received Rx samples. The filter coefficients for the filters may be already stored in the modem memory and activated by the modem 220 based on the filter number provided by the processor 210.

FIG. 7 shows the case where the interference signal frequency 702 is inside the Rx signal frequency band 704 of the modem 220 (i.e., the case where the impact is high). If the interference signal frequency is inside the DL Rx signal frequency bandwidth, for example, if {(f_DL - f int) < 20 MHz} (i.e., the interference frequency lies inside the received signal bandwidth), the interference signal will produce strong interference to the modem Rx signal, and it requires removal of the interference signal. If the bandwidth of the interference signal is very narrow, it may be considered as a spur frequency and the spur frequency may be removed using spur removal techniques, which will be explained in detail below. The modem 220 is provided with the interference signal frequency type (e.g., a narrow band or a wide band) in the message received from the processor 210, and if the interference signal is narrow band, then the modem 220 may apply spur cancellation on the Rx signal. If the interference signal is a wide band signal, the modem 220 may apply spatial-temporal whitening filtering on the Rx signal, which will be explained in detail below.

As shown in FIGS. 5-7, the interference signals may be located outside or inside of the modem DL signal band. When the interference signal is located outside but close to the DL signal band (e.g., as shown in FIG. 6), it is treated as out-of-band interference. When the interference signal is located inside the DL signal band (e.g., as shown in FIG. 7), it is treated as in-band interference signal. Different filters may be used for each of these cases.

In case where the interference signal lies outside the modem Rx signal BW, a finite impulse response (FIR) or infinite impulse response (IIR) filter, as an example, may be used to attenuate the out-of-band interference signal knowing the interference signal characteristics (as characterized in advance). The filter coefficients are pre-computed using the interference signal frequency characteristics for each of the interference signals and stored in the modem 220. These filters may be static, and the filter coefficients may be derived for one time and stored in the modem 220. With the filter 222, the received signal of the modem 220 is multiplied with the filter coefficients to attenuate the interference signals.

In case of an in-band interference signal, as the interference signal lies inside the modem Rx signal BW (co-channel interference), a simple FIR or IIR filter may not be used as it may damage the signal characteristics of the modem Rx signal and cause Rx signal-to-noise ratio (SNR) degradation. Therefore, in this case, depending on the bandwidth of the interference signal, a spur removal technique may be used to remove the spur signal, or a spatial-temporal whitening filter may be used to suppress the colored (in-band) interference.

In examples, if the interference signal is a wideband signal, a spatial-temporal whitening filter may be used. Generally, the spatial-temporal whitening filter is an adaptive filter. However, as the signal characteristics of the platform-emitted interference signals are fixed and pre-known, the filter coefficients for the spatial-temporal whitening filter may be computed one time and stored (e.g., in the modem 220).

For derivation of the filter coefficients for the spatial-temporal whitening filter, known data s[n] may be transmitted from a tester to the modem 220 during signal characterization time. Let, x(n) = [$x_r(n)$ $x_i(n)$] , n = 0,1,...,$N_r$ - 1 are the received samples by the modem 220, where $x_r(n)$ and $x_i(n)$, respectively, denote the real (I) and imaginary (Q) components of the received samples by the modem 220 and $N_r$ denotes the number of samples received over a burst.

The vector x(n) is modeled as the convolution of the (L+1)-tap radio channel impulse response h(k) = [$h_r(k)$ $h_i(k)$],k = 0,1,...,L and the transmitted symbols s(n), which is known to the modem receiver (i.e., transmitted by a tester during profiling time to generate a component interference profile).

$$x(n) = \sum_{k=0}^{L} s(n - k)h(k) + v(n). \qquad \text{Equation (1)}$$

The noise vector v(n) = [$v_r(n)v_i(n)$] contains the interference and the white noise on the I- and Q-components of the received samples. With interference-limited channel, the noise $v_r(n)$ and $v_i(n)$ are spatially and temporally correlated. To exploit the spatial-temporal correlation of v(n) for canceling interference, v(n) is modeled as a vector auto regressive (VAR) process of order K as follows,

$$v(n) + \sum_{k=1}^{K} v(n - k)A(k) = e(n). \qquad \text{Equation (2)}$$

In Equation (2), $A_k$ are 2×2 real matrices and e(n) = [$e_r(n)$ $ei(n)$] is a white Gaussian noise vector. To reduce the computational complexity, the value of K may be set to 1 so that Equation (2) becomes as:

$$v(n) + v(n - 1)A(1) = e(n). \qquad \text{Equation (3)}$$

Equation (3) represents a 2-tap matrix FIR filter. The first tap is a 2×2 identity matrix and the second tap is a 2×2 real matrix whose elements are to be estimated. As here the filtering results in white Gaussian noise e(n), so, the filter can be called a whitening filter.

The vector e(n) represents the noise after whitening and it is referred to as residual noise. The residual noise correlation matrix is defined as:

$$Q = E\{e^T(n)e(n)\} = \begin{vmatrix} q_{rr} & q_{ri} \\ q_{ir} & q_{ii} \end{vmatrix}. \qquad \text{Equation (4)}$$

Note that e(n) is temporally white but spatially correlated, and the off-the-diagonal elements of Q have in general non-zero values. The determinant of the residual noise correlation matrix is a measure of the residual noise power after whitening.

$$det = q_{rr}q_{ii-}q_{ri}q_{ir}.$$ Equation (5)

By right-multiplying both sides of Equation (3) with $v^T$ (n - k), k = 0,1 and taking expectations, the following Yule-Walker equations are obtained, where P(k), k = 0,1, denotes autocorrelation functions of noise v(n).

$$P(0) + P(-1)A(1) = Q,$$ Equation (6)

$$P(1) + P(0)A(1) = 0,$$ Equation (7)

where P(k) = $E\{v^T(n- k)v(n)\}$, k = 0,1.

Solving the Yule-Walker equations for A(1) and Q yields:

$$A(1) = -P^{-1}(0)P(1),$$ Equation (8)

$$Q = P(0) + P(-1)A(1) = P(0) + P^T(1)A(1).$$ Equation (9)

Applying the whitening filter to the samples received by the modem 220 results in temporally white but spatially correlated noise e(n). Better performance is achieved if the residual noise after whitening is both temporally and spatially un-correlated. This can be achieved by calculating the Cholesky factorization of the inverse of the residual noise correlation matrix:

$$LL^T = Q^{-1}.$$ Equation (10)

The whitening filter after spatial de-correlation is represented by the two matrix taps B(0) and B(1) defined as:

$$B(0) = L, \text{ and}$$ Equation (11)

$$B(1) = A(1)L.$$ Equation (12)

The spatial-temporal whitening algorithm convolves the received samples with the whitening filter taps to generate whitened samples as follows:

$$x_w(n) = \sum_{k=0}^{1} x(n - k)B(k).$$ Equation (13)

During the filter co-efficient generation, s[n] is known (as transmitted from the tester), the filter coefficient (B(k)) is computed for different combinations of interference signals from various platform components and then multiplied to the signal samples received by the modem. B(k) is pre-computed and stored.

If the interference signal frequency is narrow band (e.g., < 1 KHz) and appears inside the modem Rx signal bandwidth, it could be treated as a spur signal. In this case, the interference signal may be removed using a spur removal technique considering the known interference signal as a spur signal. The modem 220 may treat the narrow band interference frequency as a spur frequency. Conventionally, a mixer in the RF chain of the device generally creates spur frequency, and it is cancelled using a hardware or software-based spur cancellation method. Generally, in a modem there are already some spur removal components implemented in hardware to remove the spur generated by the mixer. In such case, the spur cancellation unit in the modem 220 may be programmed with the interference frequency as a spur frequency and the interference signal may be cancelled in the spur cancellation unit. This may be implemented in RF or baseband software as well.

If the modem 220 does not include a hardware (a spur removal component) to remove a spur signal, a software-based spur cancellation method may be used to remove the interference signal frequency. For the software-based spur cancellation method, the I/Q samples of the received signal by the modem 220 may be rotated by an amount which is equal to the spur frequency (i.e., $x[n] = x[n].e^{-jw(spur).t}$). Here, n is the sample number, w(spur) = 27πf(spur), where f(spur) is the spur frequency. Then, the I/Q samples are summed up to get an average, e.g., the DC value, ($I\_avg = \Sigma I(n)$ and $Q\_avg = \Sigma Q(n)$). Once the spur signal is rotated to the DC frequency (e.g., 0 Hz), then the spur signal comes to the DC point (0 Hz). Once the I/Q samples are summed, the sum of the interference signal component is obtained.

The I avg and Q avg are then subtracted from each I/Q samples to remove the DC component, which means that the interference signal is subtracted from the received signal. After subtraction, the resultant signal is again de-rotated back to the original signal, i.e., after subtraction, the I/Q samples are multiplied by e+jw(spur).t to construct the original received signal ($x[n] = x[n].e^{+jw(spur).t}$).

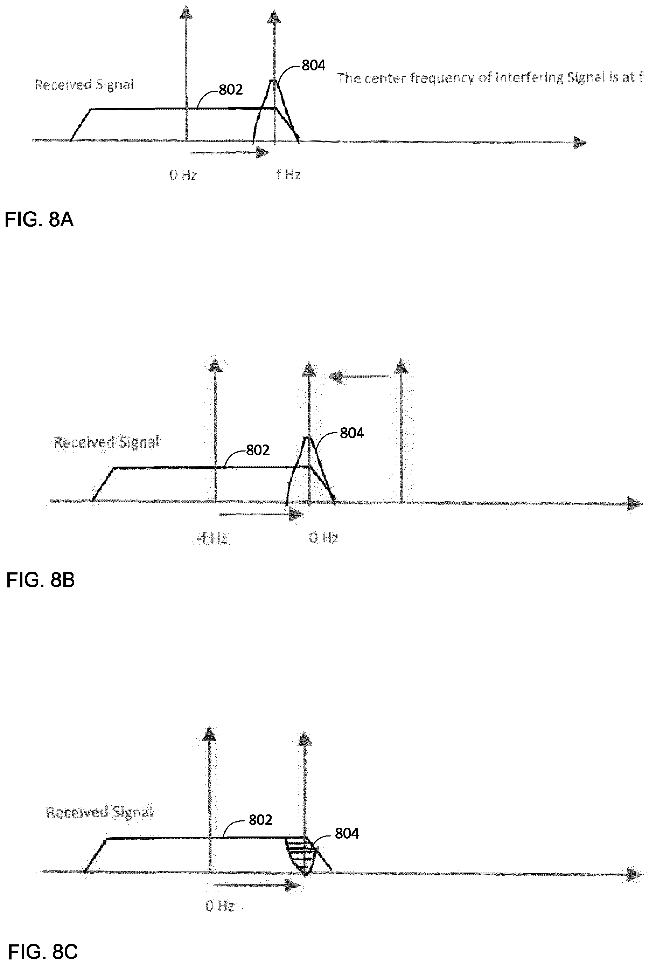

In this way the narrow band known interference signal may be removed from the modem Rx signal without sacrificing much of the energy of the received signal. FIGS. 8A-8C show an example process of interference signal removal treating the interference signal as a spur signal. FIG. 8A shows the modem received signal 802 and the platform-emitted interference signal 804 before rotation. The center frequency of the platform-emitted interference signal 804 is at f Hz. FIG. 8B shows the received signal 802 and the interference signal 804 after rotation. FIG. 8C shows the received signal 802 after removal (subtraction) of the interference signal 804.

In some examples, an interference frequency avoidance technique may be implemented. Once the processor 210 (e.g., SoC) communicates the modem 220 about the interference frequencies (platform-emitted RF interference), the modem 220 knows which frequencies should be avoided (if possible) for downlink communication to have a proper communication link with the network. When a modem 220 (e.g., a cellular modem) is in an idle mode, the modem 220 camps on a certain cell. The modem 220 performs a cell selection/reselection process by measuring neighbor cells during the idle mode. If a neighbor cell's frequency is close to the frequency of the platform-emitted interference signal, the modem 220 may then avoid the neighbor cell corresponding to the interference frequency or gives a lower priority to the neighbor cell in the cell selection/reselection process.

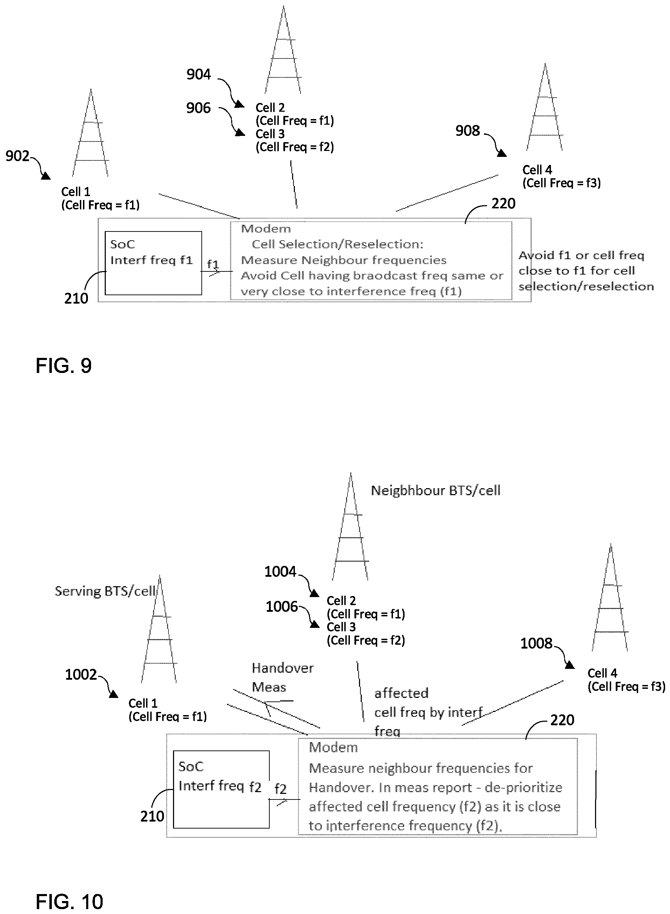

FIG. 9 shows an example scheme for interference frequency avoidance in cell selection and re-selection process in an idle mode. In this example, the modem 220 monitors a plurality of cells 902, 904, 906, 908 while in an idle mode. The processor 210 sends a message to the modem 220 indicating that frequency f1 is the interfering frequency due to the operations of the platform components. The modem 220 then avoids a cell having the frequency same as or close to the interfering frequency (f1 in this example) for cell selection/reselection. In this example, cells 1 and 2 are operating in frequency f1, and therefore, the modem 220 avoids camping on cells 1 and 2.

When a modem 220 is in a dedicated mode, the modem 220 performs measurements on neighbor cells for handover and reports the measurement results to the network. If the measurement frequency lies same as or close to the interference frequency (platform-emitted interference), the modem 220 may reduce the measurement values (e.g., a received signal strength indicator (RSSI), Rx Quality (RXQAL), etc.) on the cell(s) having the same or close frequency, so that the network does not schedule handover to those frequencies. In this way, those frequencies that can be affected by the interference signal from the platform components may be avoided intentionally for a better DL communication link. The interference-affected frequencies may be put at the bottom priority to influence the DL frequency choosing decision.

FIG. 10 shows an example scheme for interference frequency avoidance in a handover process (dedicated mode). In this example, the modem 220 is currently connected to a cell 1002 (i.e., the cell 1002 is a serving cell) and performs measurements on neighbor cells 1004, 1006, 1008 and sends measurement reports to the network. In this example, the processor 210 informs that the interfering frequency due to the operations of a platform component(s) is f2. When reporting the measurement results, the modem 220 de-prioritizes the affected cell frequency (f2 in this example) by reducing the measurement value by a certain amount or percentage. In this example, cell 3 is operating on frequency f2, and therefore, the modem 220 reduces the measurement value on cell 3 by a predetermined amount or percentage.

This scheme may be applied for Wi-Fi signal selection. The modem 220 knows the frequency that is affected by the platform-emitted interference signal. During the signal selection for communication with a wireless local area network (WLAN) access point (AP), the modem 220 may prioritize the non-affected frequency over the affected frequency.

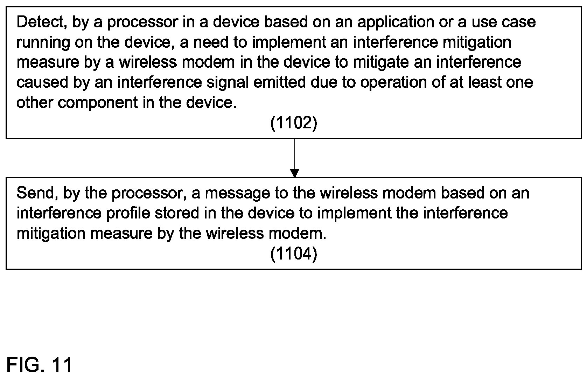

FIG. 11 is a flow diagram of an example process for mitigating a platform-emitted RF interference to a wireless modem in a device. The method includes detecting, by a processor 210 in a device 200 based on an application or a use case running on the device 200, a need to implement an interference mitigation measure by a wireless modem 220 in the device 200 to mitigate an interference caused by an interference signal emitted due to operation of at least one other component in the device 200 (1102). The method further includes sending, by the processor 210, a message to the wireless modem 220 based on an interference profile stored in the device 200 to implement the interference mitigation measure by the wireless modem 220 (1104). The interference profile may include information regarding at least one of a frequency of an interference signal, a bandwidth type of an interference signal, a bandwidth of an interference signal, or a filter number to be used for interference mitigation. The frequency characteristics of the interference signal emitted from the at least one other component in the device 200 may be determined in advance and the interference profile may be generated based on the frequency characteristics.

The method may optionally include determining based on the application or use case running on the device whether reducing an operating frequency of the at least one other component in the device will have a negative impact on performance or user experience. The message may be sent if it is determined that reducing the operating frequency of the at least one other component will have a negative impact on the performance or user experience. The method may further include reducing the operating frequency of the at least one other component if it is determined that reducing the operating frequency of the at least one other component does not have a negative impact.

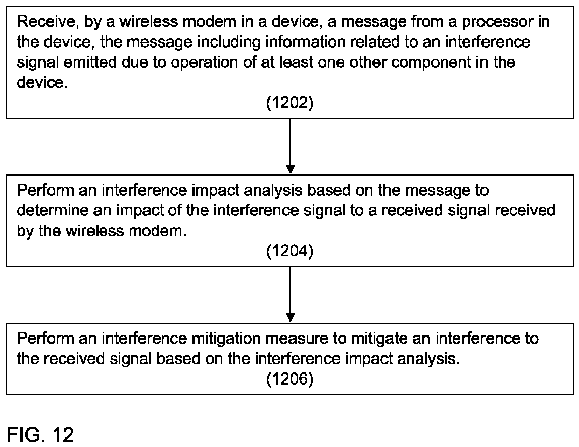

FIG. 12 is a flow diagram of an example process implemented by a wireless modem for mitigating a platform-emitted RF interference to the wireless modem. The method includes receiving, by a wireless modem in a device, a message from a processor in the device, the message including information related to an interference signal emitted due to operation of at least one other component in the device (1202). The method includes performing an interference impact analysis based on the message to determine an impact of the interference signal to a received signal received by the wireless modem (1204). The method further includes performing an interference mitigation measure to mitigate an interference to the received signal based on the interference impact analysis (1206).

The interference mitigation measure may be processing the received signal by a digital filter with digital filter coefficients that are selected based on information received in the message. In some examples, a spur frequency removal is applied on the received signal if the interference signal is a narrow band signal. In some examples, spatial-temporal whitening is performed on the received signal if the interference signal is a wideband signal.

Alternatively, the interference mitigation measure may be performed to avoid an interference frequency in cell selection and reselection in an idle mode or handover between cells in a connected state. For examples, the wireless modem may perform measurements on neighbor cells for cell selection and reselection during an idle mode and for handover during a connected state and reduce a measurement result for a frequency that is same as or close to the interference frequency by a predetermined amount or percentage for selecting a cell for camping in the idle mode or reporting the measurement result to a network in the connected state.

The example methods disclosed herein provide several advantages and will help device platforms to ensure wireless modem data throughput performance. The example methods help to cancel/suppress the platform component emitted interference signals in a modem (in cellular or Wi-Fi modem) by knowing their characteristics, so that the modem performance is not degraded. At the same time, it helps to avoid the use of component RF shielding in the platform PCB, and therefore helps to save cost and thickness of the device (e.g., a form factor and a weight of the device platform).

The example methods take care of cancelling all types of known platform interference signals (both in-band and out-of-band interference signals) so that the reception signal quality and data throughput are improved.

The example methods decide whether to shift the any platform component's operating frequency or to execute the interference mitigation mechanism in a modem based on the running use case and workload requirements. So that it does not impact the use case performance (user experience) due to shift in frequency.

In future there could be many platform components which may emit RF frequencies. The example methods help to mitigate many interference signals at the same time and can be a long-term solution.

The example methods can be implemented in a modem side, so that there will be less burden in the processor (SoC) for managing the platform interference. The modem already has instrumentation (as it also cancels the wireless channel's interference signals) for interference mitigation. Therefore, the modem can execute the mitigation techniques by reusing existing modem components. The examples methods first analyze the impact of the interference signal on the signal reception and based on that take appropriate action to mitigate/cancel/reject the interference signal accordingly.

The example methods disclosed herein may be extended for interference mitigation in co-existence feature (e.g., Wi-Fi and cellular (e.g., 5G, 6G) coexistence in the same frequency band such as an unlicensed frequency band). Nowadays many devices/platforms support the co-existence feature. The example methods disclosed herein will help to combat the interference from other wireless modems (transmit signal interference from other modems) as well in the platform, by knowing their signal characteristics. The example methods address modem performance irrespective of system interference/noise issues.

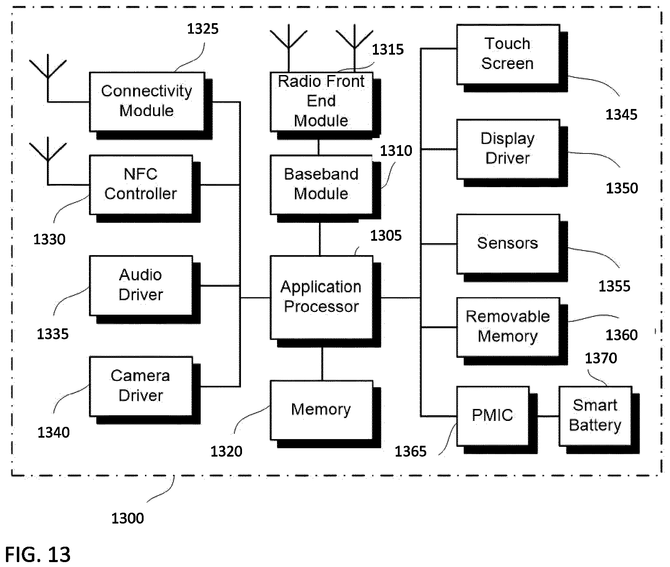

FIG. 13 illustrates a user device 1300 in which the examples disclosed herein may be implemented. For example, the examples disclosed herein may be implemented in the radio front-end module 1315, in the baseband module 1310, etc. The user device 1300 may be a mobile device in some aspects and includes an application processor 1305, baseband processor 1310 (also referred to as a baseband module), radio front end module (RFEM) 1315, memory 1320, connectivity module 1325, near field communication (NFC) controller 1330, audio driver 1335, camera driver 1340, touch screen 1345, display driver 1350, sensors 1355, removable memory 1360, power management integrated circuit (PMIC) 1365 and smart battery 1370.

In some aspects, application processor 1305 may include, for example, one or more CPU cores and one or more of cache memory, low drop-out voltage regulators (LDOs), interrupt controllers, serial interfaces such as serial peripheral interface (SPI), inter-integrated circuit (I2C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 1310 may be implemented, for example, as a solder-down substrate including one or more integrated circuits, a single packaged integrated circuit soldered to a main circuit board, and/or a multi-chip module containing two or more integrated circuits.

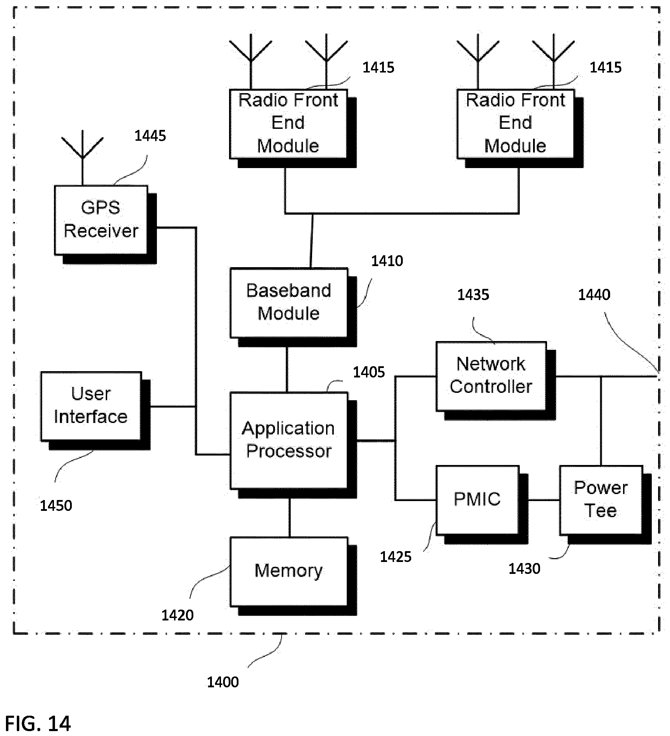

FIG. 14 illustrates a base station or infrastructure equipment radio head 1400 in which the examples disclosed herein may be implemented. For example, the examples disclosed herein may be implemented in the radio front-end module 1415, in the baseband module 1410, etc. The base station radio head 1400 may include one or more of application processor 1405, baseband modules 1410, one or more radio front end modules 1415, memory 1420, power management circuitry 1425, power tee circuitry 1430, network controller 1435, network interface connector 1440, satellite navigation receiver module 1445, and user interface 1450.

In some aspects, application processor 1405 may include one or more CPU cores and one or more of cache memory, low drop-out voltage regulators (LDOs), interrupt controllers, serial interfaces such as SPI, I2C or universal programmable serial interface module, real time clock (RTC), timer-counters including interval and watchdog timers, general purpose IO, memory card controllers such as SD/MMC or similar, USB interfaces, MIPI interfaces and Joint Test Access Group (JTAG) test access ports.

In some aspects, baseband processor 1410 may be implemented, for example, as a solder-down substrate including one or more integrated circuits, a single packaged integrated circuit soldered to a main circuit board or a multi-chip module containing two or more integrated circuits.

In some aspects, memory 1420 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magneto resistive random access memory (MRAM) and/or a three-dimensional crosspoint memory. Memory 1420 may be implemented as one or more of solder down packaged integrated circuits, socketed memory modules and plug-in memory cards.

In some aspects, power management integrated circuitry 1425 may include one or more of voltage regulators, surge protectors, power alarm detection circuitry and one or more backup power sources such as a battery or capacitor. Power alarm detection circuitry may detect one or more of brown out (under-voltage) and surge (over-voltage) conditions.

In some aspects, power tee circuitry 1430 may provide for electrical power drawn from a network cable to provide both power supply and data connectivity to the base station radio head 1400 using a single cable.

In some aspects, network controller 1435 may provide connectivity to a network using a standard network interface protocol such as Ethernet. Network connectivity may be provided using a physical connection which is one of electrical (commonly referred to as copper interconnect), optical or wireless.

In some aspects, satellite navigation receiver module 1445 may include circuitry to receive and decode signals transmitted by one or more navigation satellite constellations such as the global positioning system (GPS), Globalnaya Navigatsionnaya Sputnikovaya Sistema (GLONASS), Galileo and/or BeiDou. The receiver 1445 may provide data to application processor 1405 which may include one or more of position data or time data. Application processor 1405 may use time data to synchronize operations with other radio base stations.

In some aspects, user interface 1450 may include one or more of physical or virtual buttons, such as a reset button, one or more indicators such as light emitting diodes (LEDs) and a display screen.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:

An example (e.g., example 1) relates to a method to mitigate an RF interference to a wireless modem (220) in a device (200). The method includes detecting, by a processor (210) in a device (200) based on an application or a use case running on the device (200), a need to implement an interference mitigation measure by a wireless modem (220) in the device (200) to mitigate an interference caused by an interference signal emitted due to operation of at least one other component in the device (200), and sending, by the processor (210), a message to the wireless modem (220) based on an interference profile stored in the device (200) to implement the interference mitigation measure by the wireless modem (220). The interference profile may include information regarding at least one of a frequency of an interference signal, a bandwidth type of an interference signal, a bandwidth of an interference signal, or a filter number to be used for interference mitigation.

Another example (e.g., example 2) relates to a previously described example (e.g., example 1), wherein frequency characteristics of the interference signal emitted from the at least one other component in the device is determined and the interference profile is generated based on the frequency characteristics.

Another example (e.g., example 3) relates to a previously described example (e.g., any one of examples 1-2), further including determining based on the application or use case running on the device (200) whether reducing an operating frequency of the at least one other component in the device (200) will have a negative impact on performance or user experience. The message may be sent if it is determined that reducing the operating frequency of the at least one other component will have a negative impact on the performance or user experience.

Another example (e.g., example 4) relates to a previously described example (e.g., example 3), further including reducing the operating frequency of the component if it is determined that reducing the operating frequency of the at least one other component does not have a negative impact.

Another example (e.g., example 5) relates to a method to mitigate an RF interference to a wireless modem (220) in a device (200). The method includes receiving, by a wireless modem (220) in a device (200), a message from a processor (210) in the device (200), the message including information related to an interference signal emitted due to operation of at least one other component in the device (200), performing an interference impact analysis based on the message to determine an impact of the interference signal to a received signal received by the wireless modem (220), and performing an interference mitigation measure to mitigate an interference to the received signal based on the interference impact analysis.

Another example (e.g., example 6) relates to a previously described example (e.g., example 5), wherein the received signal is processed by a digital filter (222) with digital filter coefficients that are selected based on information received in the message.

Another example (e.g., example 7) relates to a previously described example (e.g., example 6), wherein a spur frequency removal is applied on the received signal if the interference signal is a narrow band signal.

Another example (e.g., example 8) relates to a previously described example (e.g., example 6), wherein spatial-temporal whitening is performed on the received signal if the interference signal is a wideband signal.

Another example (e.g., example 9) relates to a previously described example (e.g., any one of examples 5-8), wherein the interference mitigation measure is performed to avoid an interference frequency in cell selection and reselection in an idle mode or handover between cells in a connected state.

Another example (e.g., example 10) relates to a previously described example (e.g., example 9), wherein the wireless modem is configured to perform measurements on neighbor cells for cell selection and reselection during an idle mode and for handover during a connected state and reduce a measurement result for a frequency that is same as or close to the interference frequency by a certain amount or percentage for selecting a cell for camping in the idle mode or reporting the measurement result to a network in the connected state.

Another example (e.g., example 11) relates to a processor (210) configured to mitigate an RF interference to a wireless modem (220) in a device (200). The processor includes circuitry configured to detect, based on an application or a use case running on the device (200), a need to implement an interference mitigation measure by the wireless modem (220) in the device (200) to mitigate an interference caused by an interference signal emitted due to operation of at least one other component in the device (200), and send a message to the wireless modem (220) based on an interference profile stored in the device (200) to implement the interference mitigation measure by the wireless modem (220). The interference profile includes information regarding at least one of a frequency of an interference signal, a bandwidth type of an interference signal, a bandwidth of an interference signal, or a filter number to be used for interference mitigation.

Another example (e.g., example 12) relates to a previously described example (e.g., example 11), wherein frequency characteristics of the interference signal emitted from the at least one other component in the device (200) is determined and the interference profile is generated based on the frequency characteristics.

Another example (e.g., example 13) relates to a previously described example (e.g., any one of examples 11-12), wherein the circuitry is further configured to determine based on the application or use case running on the device (200) whether reducing an operating frequency of the at least one other component will have a negative impact on performance or user experience, and send the message if it is determined that reducing the operating frequency of the at least one other component will have a negative impact on the performance or user experience.

Another example (e.g., example 14) relates to a previously described example (e.g., example 13), wherein the circuitry is further configured to reduce the operating frequency of the at least one other component if it is determined that reducing the operating frequency of the at least one other component does not have a negative impact.

Another example (e.g., example 15) relates to a wireless modem (220), comprising circuitry configured to receive a message from a processor (210) in a device (200), wherein the message includes information related to an interference signal emitted due to operation of at least one other component in the device (200), and both the wireless modem (220) and the processor (210) are included in the device (200). The circuitry is configured to perform an interference impact analysis based on the message to determine an impact of the interference signal to a received signal received by the wireless modem (220) and perform an interference mitigation measure to mitigate an interference to the received signal based on the interference impact analysis.

Another example (e.g., example 16) relates to a previously described example (e.g., example 15), wherein the circuitry includes a digital filter (222) to process the received signal with digital filter coefficients that are selected based on information received in the message.

Another example (e.g., example 17) relates to a previously described example (e.g., example 16), wherein the circuitry is further configured to perform a spur frequency removal on the received signal if the interference signal is a narrow band signal.

Another example (e.g., example 18) relates to a previously described example (e.g., example 16), wherein the circuitry is further configured to perform spatial-temporal whitening on the received signal if the interference signal is a wideband signal.

Another example (e.g., example 2) relates to a previously described example (e.g., any one of examples 15-18), wherein the circuitry is further configured to perform the interference mitigation measure to avoid an interference frequency in cell selection and reselection or handover between cells.

Another example (e.g., example 20) relates to a previously described example (e.g., example 19), wherein the circuitry is configured to perform measurements on neighbor cells for cell selection and reselection during an idle mode and for handover during a connected state and reduce a measurement result for a frequency that is same as or close to the interference frequency by a certain amount or percentage for selecting a cell for camping in the idle mode or reporting the measurement result to a network in the connected state.

Another example (e.g., example 21) relates to a machine-readable storage medium including machine readable instructions, when executed, to implement a method as in any one of examples 1-10.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A method to mitigate a radio frequency, RF, interference to a wireless modem (220) in a device (200), comprising:

   detecting, by a processor (210) in a device (200) based on an application or a use case running on the device (200), a need to implement an interference mitigation measure by a wireless modem (220) in the device (200) to mitigate an interference caused by an interference signal emitted due to operation of at least one other component in the device (200); and
   sending, by the processor (210), a message to the wireless modem (220) based on an interference profile stored in the device (200) to implement the interference mitigation measure by the wireless modem (220), wherein the interference profile includes information regarding at least one of a frequency of an interference signal, a bandwidth type of an interference signal, a bandwidth of an interference signal, or a filter number to be used for interference mitigation.

2. The method of claim 1, wherein frequency characteristics of the interference signal emitted from the at least one other component in the device is determined and the interference profile is generated based on the frequency characteristics.

3. The method as in any one of claims 1-2, further comprising:

   determining based on the application or use case running on the device (200) whether reducing an operating frequency of the at least one other component in the device (200) will have a negative impact on performance or user experience,
   wherein the message is sent if it is determined that reducing the operating frequency of the at least one other component will have a negative impact on the performance or user experience.

4. The method of claim 3, further comprising:
   reducing the operating frequency of the component if it is determined that reducing the operating frequency of the at least one other component does not have a negative impact.

5. A method to mitigate a radio frequency, RF, interference to a wireless modem (220) in a device (200), comprising:

   receiving, by a wireless modem (220) in a device (200), a message from a processor (210) in the device (200), the message including information related to an interference signal emitted due to operation of at least one other component in the device (200);
   performing an interference impact analysis based on the message to determine an impact of the interference signal to a received signal received by the wireless modem (220); and
   performing an interference mitigation measure to mitigate an interference to the received signal based on the interference impact analysis.

6. The method of claim 5, wherein the received signal is processed by a digital filter (222) with digital filter coefficients that are selected based on information received in the message,

wherein a spur frequency removal is applied on the received signal if the interference signal is a narrow band signal, and spatial-temporal whitening is performed on the received signal if the interference signal is a wideband signal.

7. The method of claim 5, wherein the interference mitigation measure is performed to avoid an interference frequency in cell selection and reselection in an idle mode or handover between cells in a connected state,
   wherein the wireless modem is configured to perform measurements on neighbor cells for cell selection and reselection during an idle mode and for handover during a connected state and reduce a measurement result for a frequency that is same as or close to the interference frequency by a certain amount or percentage for selecting a cell for camping in the idle mode or reporting the measurement result to a network in the connected state.

8. A processor (210) configured to mitigate a radio frequency, RF, interference to a wireless modem (220) in a device (200), comprising:

   circuitry configured to detect, based on an application or a use case running on the device (200), a need to implement an interference mitigation measure by the wireless modem (220) in the device (200) to mitigate an interference caused by an interference signal emitted due to operation of at least one other component in the device (200), and send a message to the wireless modem (220) based on an interference profile stored in the device (200) to implement the interference mitigation measure by the wireless modem (220),
   wherein the interference profile includes information regarding at least one of a frequency of an interference signal, a bandwidth type of an interference signal, a bandwidth of an interference signal, or a filter number to be used for interference mitigation.

9. The processor (210) of claim 8, wherein frequency characteristics of the interference signal emitted from the at least one other component in the device (200) is determined and the interference profile is generated based on the frequency characteristics.

10. The processor (210) as in any one of claims 8-9, wherein the circuitry is further configured to determine based on the application or use case running on the device (200) whether reducing an operating frequency of the at least one other component will have a negative impact on performance or user experience, and send the message if it is determined that reducing the operating frequency of the at least one other component will have a negative impact on the performance or user experience.

11. The processor (210) of claim 10, wherein the circuitry is further configured to reduce the operating frequency of the at least one other component if it is determined that reducing the operating frequency of the at least one other component does not have a negative impact.

12. A wireless modem (220), comprising:

   circuitry configured to receive a message from a processor (210) in a device (200), wherein the message includes information related to an interference signal emitted due to operation of at least one other component in the device (200), and both the wireless modem (220) and the processor (210) are included in the device (200); and
   the circuitry configured to perform an interference impact analysis based on the message to determine an impact of the interference signal to a received signal received by the wireless modem (220) and perform an interference mitigation measure to mitigate an interference to the received signal based on the interference impact analysis.

13. The modem device (220) of claim 12, wherein the circuitry includes a digital filter (222) to process the received signal with digital filter coefficients that are selected based on information received in the message,
   wherein the circuitry is further configured to perform a spur frequency removal on the received signal if the interference signal is a narrow band signal, and/or perform spatial-temporal whitening on the received signal if the interference signal is a wideband signal.

14. The modem device (220) of claim 12, wherein the circuitry is further configured to perform the interference mitigation measure to avoid an interference frequency in cell selection and reselection or handover between cells,
   wherein the circuitry is configured to perform measurements on neighbor cells for cell selection and reselection during an idle mode and for handover during a connected state and reduce a measurement result for a frequency that is same as or close to the interference frequency by a certain amount or percentage for selecting a cell for camping in the idle mode or reporting the measurement result to a network in the connected state.

**15.** A machine-readable storage medium including machine readable instructions, when executed, to implement a method as in any one of claims 1-7.

100

Laptop Platform

110

Cell-1 BTS

RF signal Emission from different platform components like FIVR, DDR,..

Interferes with Modem Rx signal reception

degrades data throughput

FIG. 1

200

Device

Processor

Wireless modem

Digital filter

220

210

222

FIG. 2

Generate a component interference profile.
(302)

Perform interference impact analysis.
(310)

Send a message to the modem.
(308)

Whether reducing the component operating frequency will have a negative impact on performance?
(304)

Yes

No

Perform an appropriate action. (312)

(1) If no impact, perform no action.
(2) If the impact is not high, apply filter coefficients to remove the interference signal.
(3) If the impact is high, apply different filter coefficients for removing the interference signals (e.g., apply spur frequency removal for the narrow band signal, or apply a spatial-temporal whitening filter for the wideband signal).
(4) Perform interference frequency avoidance mechanism.

Reduce the operating frequency of the platform component.
(306)

FIG. 3

402

404

402

Frequency

FIG. 4

504

502

Bandwidth

Received Signal

Separation between Rx
signal and Interfering
signal

Bandwidth

Interfering Signal

Frequency

FIG. 5

604

602

Frequency

Bandwidth
Received Signal

Bandwidth
Interfering Signal

FIG. 6

Received Signal

702
Interfering Signal

704

Frequency

FIG. 7

FIG. 8A

FIG. 8B

FIG. 8C

904

906

Cell 2
(Cell Freq = f1)
Cell 3
(Cell Freq = f2)

908

Cell 4
(Cell Freq = f3)

902

Cell 1
(Cell Freq = f1)

220

**Modem**
Cell Selection/Reselection:
Measure Neighbour frequencies
Avoid Cell having braodcast freq same or
very close to interference freq (f1)

Avoid f1 or cell freq
close to f1 for cell
selection/reselection

**SoC**
Interf freq f1    f1

210

FIG. 9

Neigbhbour BTS/cell

1004

1006

Cell 2
(Cell Freq = f1)
Cell 3
(Cell Freq = f2)

Serving BTS/cell

1008

Cell 4
(Cell Freq = f3)

1002

Cell 1
(Cell Freq = f1)

Handover
Meas

affected
cell freq by interf
freq

220

**SoC**
Interf freq f2   f2

**Modem**
Measure neighbour frequencies for
Handover. In meas report - de-prioritize
affected cell frequency (f2) as it is close
to interference frequency (f2).

210

FIG. 10

Detect, by a processor in a device based on an application or a use case running on the device, a need to implement an interference mitigation measure by a wireless modem in the device to mitigate an interference caused by an interference signal emitted due to operation of at least one other component in the device.

(1102)

Send, by the processor, a message to the wireless modem based on an interference profile stored in the device to implement the interference mitigation measure by the wireless modem.

(1104)

FIG. 11

Receive, by a wireless modem in a device, a message from a processor in the device, the message including information related to an interference signal emitted due to operation of at least one other component in the device.

(1202)

Perform an interference impact analysis based on the message to determine an impact of the interference signal to a received signal received by the wireless modem.

(1204)

Perform an interference mitigation measure to mitigate an interference to the received signal based on the interference impact analysis.

(1206)

FIG. 12

FIG. 13

FIG. 14

Europäisches
Patentamt

European
Patent Office

Office européen
des brevets

# EUROPEAN SEARCH REPORT

Application Number

EP 22 16 4324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/133185 A1 (CHEN CAMILLE [US] ET AL) 14 May 2015 (2015-05-14) <br> * paragraph [0002] - paragraph [0004] * <br> * paragraph [0021] - paragraph [0077] * <br> * figures 1-13 * <br> ----- | 1-6, 8-13,15 | INV. <br> H04B1/10 <br> H04B15/02 |
| X | US 8 340 580 B1 (EPSTEIN BRACHA [IL]) 25 December 2012 (2012-12-25) <br> * column 2, line 58 - column 12, line 9 * <br> * figures 1-9 * <br> ----- | 1-6, 8-13,15 | |
| A | WO 2021/136427 A1 (ZTE CORP [CN]) 8 July 2021 (2021-07-08) <br> * paragraph [0022] - paragraph [0050] * <br> * paragraph [0063] - paragraph [0089] * <br> * figures 1-3, 5, 9 * <br> ----- | 1-6, 8-13,15 | |

TECHNICAL FIELDS
SEARCHED      (IPC)

H04B

The present search report has been drawn up for all claims

| Place of search | Date of completion of the search | Examiner |
|---|---|---|
| Munich | 15 September 2022 | Patrovsky, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

Europäisches
Patentamt

European
Patent Office

Office européen
des brevets

**Application Number**

**EP 22 16 4324**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-6, 8-13, 15**

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 22 16 4324

The Search Division considers that the present European patent application does not comply with the requirements of unity of invention and relates to several inventions or groups of inventions, namely:

        1. claims: 1-6, 8-13, 15

                Adaptive filtering of an interference signal from a received
                signal (claims 6, 13);
                                        ---

        2. claims: 7, 14

                Avoiding an interference frequency by appropriate cell
                selection (claims 7 and 14)
                                        ---

# EP 4 250 573 A1

## ANNEX TO THE EUROPEAN SEARCH REPORT
## ON EUROPEAN PATENT APPLICATION NO.

EP 22 16 4324

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2022

| Patent document cited in search report | | Publication date | Patent family member(s) | | Publication date |
|---|---|---|---|---|---|
| US 2015133185 | A1 | 14-05-2015 | NONE | | |
| US 8340580 | B1 | 25-12-2012 | US | 8340580 B1 | 25-12-2012 |
| | | | US | 9107172 B1 | 11-08-2015 |
| WO 2021136427 | A1 | 08-07-2021 | CN | 112118021 A | 22-12-2020 |
| | | | EP | 4087142 A1 | 09-11-2022 |
| | | | WO | 2021136427 A1 | 08-07-2021 |

EPO FORM P0459

For more details about this annex : see Official Journal of the European Patent Office, No. 12/82